# EUROPEAN PATENT SPECIFICATION

(11) **EP 2 200 282 B1**
(45) Date of publication and mention of the grant of the patent: **17.10.2012**
(21) Application number: 09168309.4
(22) Date of filing: 20.08.2009
(51) Int. Cl.: H04N 5/445, H04N 5/50, H04N 5/46

(54) **Broadcast processing apparatus and control method thereof**
Rundfunkverarbeitungsvorrichtung und Steuerverfahren dafür
Appareil de traitement de diffusion et son procédé de commande

(30) Priority: 19.12.2008 KR 20080129819
(43) Date of publication of application: 23.06.2010
(73) Proprietor: Samsung Electronics Co., Ltd., Suwon-si, Gyeonggi-do, 443-742 (KR)
(72) Inventor: Ko, Chang-seog, Gyeonggi-do (KR); Kim, Won-il, Gyeonggi-do (KR); Kwon, Yong-hwan, Gyeonggi-do (KR)
(74) Representative: Brandon, Paul Laurence

(56) References cited:
- EP-A2- 1 750 438
- WO-A2-2005/076610
- US-A1- 2005 057 698

## Description

### BACKGROUND OF THE INVENTION

### 1. Field of the Invention

Apparatuses and methods consistent with the present invention relate to a broadcast processing apparatus and a control method thereof, and more particularly, to a broadcast processing apparatus and a control method thereof which displays a setup user interface (UI) to select a transmission method and a processing method for performing an automatic channel setup, performs an automatic channel setup through the transmission method and the processing method selected by a user through the setup UI, enables a user to perform an automatic channel setup through a desired method according to the user's preference and perform the automatic channel setup more easily.

### 2. Description of the Related Art

A broadcast processing apparatus, e.g., a digital television (DTV) processes a received broadcasting signal and displays the broadcasting signal on a display panel such as a liquid crystal display (LCD). In recent years, the DTV has been consolidated into a broadcasting system which receives and displays cable broadcasting, satellite broadcasting, Internet protocol television (IPTV) broadcasting as well as existing terrestrial broadcasting. Meanwhile, a user should search available channels through an automatic channel setup and store the searched channels to view a broadcasting through the DTV.

Hereinafter, a related art automatic channel setup will be described in detail. A user selects one of broadcasting transmission methods such as terrestrial broadcasting, cable broadcasting, satellite broadcasting and IPTV broadcasting. Next, the user selects one of broadcasting processing methods such as an analog processing method and a digital processing method corresponding to the previously selected transmission method and performs an automatic channel setup. The user performs an automatic channel setup through another broadcasting transmission method and another broadcasting processing method. For example, a user selects "cable" as a transmission method and then "digital" as a processing method corresponding to the cable transmission method. After performing the automatic channel setup, a user selects "terrestrial" as a transmission method and "analog" as a processing method to perform another automatic channel setup.

As described above, the related art automatic channel setup is performed through each of the broadcasting transmission methods and the broadcasting processing methods. Accordingly, the automatic channel setup is complex, and channels are searched through each broadcasting transmission method. As a result, a user may be confused as if several rounds of automatic channel setup are performed.

WO 2005/076610 discloses a method for performing a selectable channel search with an apparatus such as a television signal receiver provides users with flexible search options so that they may select only those search options they desire, and thereby save considerable time when performing a channel search. According to an exemplary embodiment, a method for enabling a channel search using a television signal receiver includes steps of enabling display of an on-screen menu, and enabling a user to select a plurality of options for the channel search responsive to the on-screen menu. The plurality of options includes a first option to search at least one of a plurality of inputs to the television signal receiver and a second option to search at least one of a plurality of types of channels.

### SUMMARY OF THE INVENTION

The foregoing and/or other aspects of the present invention may be achieved by providing a broadcast processing apparatus including: an image processor which processes an image received through a plurality of transmission methods and a plurality of processing methods; a display unit which displays thereon the image processed by the image processor; a UI provider which provides a setup UI to select a transmission method and a processing method, through which an automatic channel setup is performed, among the a plurality of transmission methods and the a plurality of processing methods respectively; and a controller which displays the setup UI on the display unit if the automatic channel setup is selected, and performs the automatic channel setup through the transmission method and the processing method selected through the setup UI; characterised in that the UI provider is configured whereby for a first transmission method a processing method from the plurality of processing methods is selectable and for a second transmission method a processing method from the plurality of processing methods is selectable independently from the selection of the processing method of the first transmission method.

Further features of the present invention are set out in the appended claims.

### BRIEF DESCRIPTION OF THE DRAWINGS

The above and/or other aspects of the present invention will become apparent and more readily appreciated from the following description of the embodiments, taken in conjunction with the accompanying drawings of which:

FIG 1 is a block diagram of a broadcast processing apparatus according to an exemplary embodiment of the present invention;

FIG 2 illustrates an example of a setup UI according to an exemplary embodiment of the present invention;

FIG. 3 illustrates an example of a setup UI according to an exemplary embodiment of the present invention;

FIG. 4 illustrates an example of a setup UI according to an exemplary embodiment of the present invention; and

FIG. 5 is a flowchart of an automatic channel setup of the broadcast processing apparatus according to an exemplary embodiment of the present invention.

### DETAILED DESCRIPTION OF EXEMPLARY EMBODIMENTS

Hereinafter, exemplary embodiments of the present invention will be described with reference to accompanying drawings, wherein like numerals refer to like elements and repetitive descriptions will be avoided as necessary.

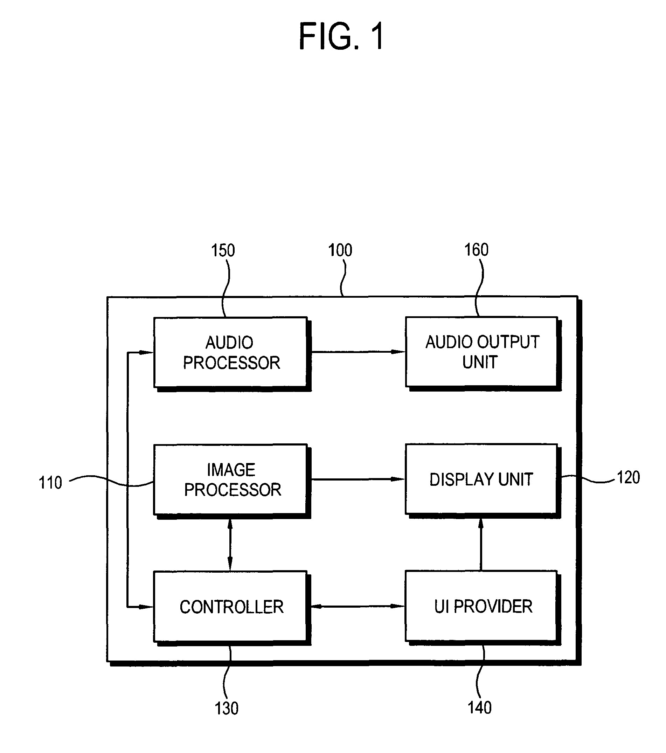

FIG. 1 is a block diagram of a broadcast processing apparatus according to an exemplary embodiment of the present invention.

As shown therein, a broadcast processing apparatus 100 according to the exemplary embodiment of the present invention processes a received broadcasting signal and displays the broadcasting signal on a display panel such as a LCD. The broadcast processing apparatus 100 may include, e.g., a digital TV

According to the exemplary embodiment of the present invention, if a user initiates or triggers an automatic channel setup, the broadcast processing apparatus 100 displays on the display unit 120 a setup UI for a user to select a transmission method and a processing method through which the automatic channel setup is performed, and performs the automatic channel setup according to the transmission method and processing method selected through the setup UI. The selection of the transmission method refers to a selection of a broadcasting transmission method such as terrestrial broadcasting, cable broadcasting, satellite broadcasting, IPTV broadcasting, external device, etc.. The selection of the processing method refers to a selection of a broadcasting processing method such as an analog processing method and a digital processing method.

As shown therein, the broadcast processing apparatus 100 according to the exemplary embodiment of the present invention includes an image processor 110 which processes a received image, a display unit 120 which displays thereon an image processed by the image processor 110, a UI provider 140 which provides a setup UI to select a transmission method and a processing method, through which an automatic channel setup is performed, and a controller 130 which displays the setup UI on the display unit 120 if the automatic channel setup is initiated or triggered by the user, and performs the automatic channel setup according to the transmission method and the processing method selected through the setup UI.

The broadcast processing apparatus 100 according to the exemplary embodiment of the present invention further includes an audio processor 150 which processes an audio of the broadcasting signal and an audio output unit 160 which outputs the audio processed by the audio processor 150.

Hereinafter, each element will be described.

The image processor 110 decodes image data included in the broadcasting signal to a decoding format corresponding to an encoding format according to which the broadcasting signal is transmitted, and converts a vertical frequency, a resolution and a picture ratio of the image data to meet output standards of the display unit 120. The image processor 110 may include an image processing module such as a scaler. According to an exemplary embodiment of the present invention, the image processor 110 processes an image received through at least one transmission method such as terrestrial broadcasting, cable broadcasting, satellite broadcasting, IPTV broadcasting, external device, etc. and at least one processing method such as an analog processing method and a digital processing method to be displayed on the display unit 120.

The display unit 120 displays thereon an image processed by the image processor 110. The display unit 120 may include a display panel (not shown) to display an image thereon, and a panel driver (not shown) to drive the display panel. The display unit 120 according to an exemplary embodiment of the present invention may include various types of display modules such as a digital light processing (DLP), an LCD and a plasma display panel (PDP).

The audio processor 150 processes audio data included in the broadcasting signal to decode it to a decoding format corresponding to an encoding format by which the broadcasting signal is transmitted. Then, the audio processor 150 outputs the audio data to the audio output unit 160.

The audio output unit 160 outputs the audio processed by the audio processor 150. The audio output unit 160 may include a plurality of speakers (not shown) with a plurality of channels.

According to an exemplary embodiment of the present invention, if an automatic channel setup is initiated or triggered by a user, the UI provider 140, in accordance with a control of the controller 130 (to be described later), displays a setup UI on the display unit 120 so that a user may select a desired transmission method and a processing method, through which the automatic channel setup is performed. As described above, the transmission method may include terrestrial broadcasting, cable broadcasting, satellite broadcasting, IPTV broadcasting, external device, etc. while the processing method may include an analog processing method or a digital processing method.

Hereinafter, the setup UI which is provided by the UI provider 140 to perform the automatic channel setup will be described in more detail. According to an exemplary embodiment of the present invention, the setup UI provides a table in which at least one transmission method is arranged in a lateral axis and at least one processing method is arranged in another lateral axis. A user may select or cancel a cell located at an intersection of the axis of the transmission method and the axis of the processing method to thereby select a desired transmission method and a desired processing method, through which the automatic channel setup is performed.

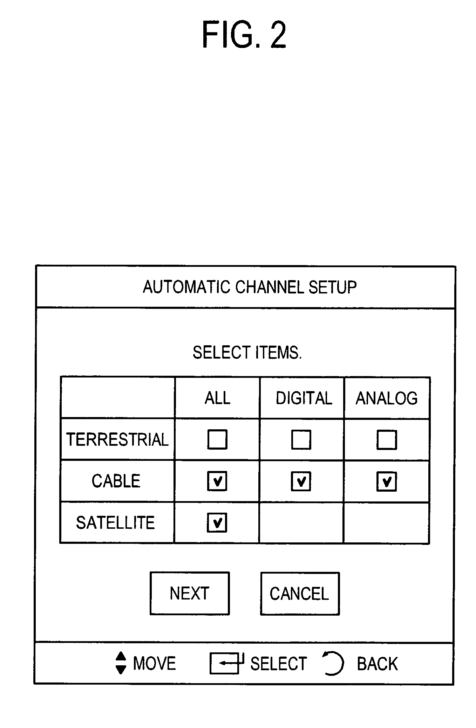

For example, FIG. 2 illustrates an example of the setup UI according to an exemplary embodiment of the present invention. As shown therein, the setup UI provides a table with 3 X 3 cells in which a transmission method such as "TERRESTRIAL", "CABLE", and "SATELLITE" are arranged in a vertical axis and a processing method such as "ALL", "DIGITAL" and "ANALOG" are arranged in a horizontal axis. Here, the item "ALL" is provided to select both the digital processing method and the analog processing method at a time.

A user selects or cancels a check box provided in each cell of the table to select a transmission method and a processing method, through which the automatic channel setup is performed. For example, if a user desires to perform an automatic channel setup through a cable transmission method and a digital processing method, the user may select the check box provided in a cell positioned in an intersection of the row of the cable transmission method and the column of the digital processing method. If a user desires to perform an automatic channel setup through a terrestrial transmission method and digital/analog processing methods, the user may select the check box provided in a cell positioned in an intersection of the row of the cable transmission method and the column of the digital processing method.

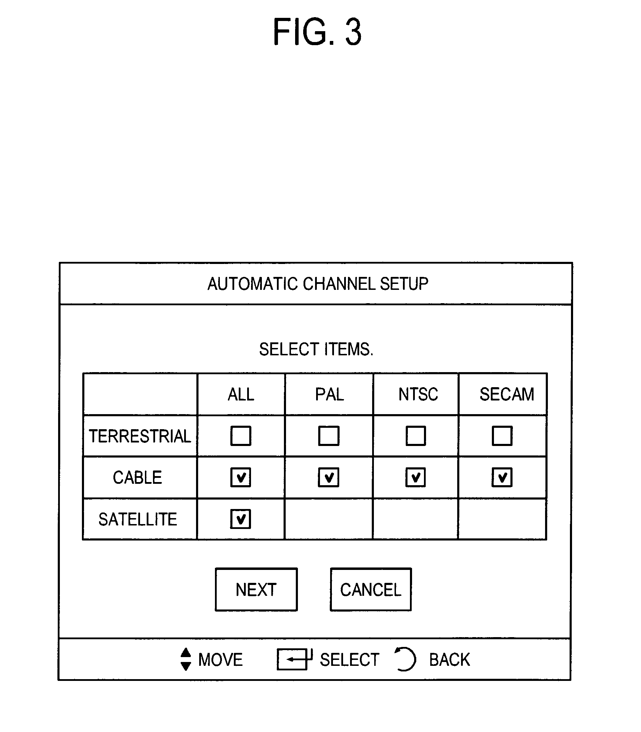

According to an exemplary embodiment of the present invention, a setup UI may include a phase alternation by line (PAL) processing method, a national television system committee (NTSC) processing method and a sequential color and memory (SECAM) processing method. FIG 3 illustrates an example of a setup UI which shows items such as PAL, NTSC and SECAM in a horizontal axis of the table of the previous exemplary embodiment. Thus, the setup UI is provided as a table with 3 X 4 cells.

According to the present exemplary embodiment, a user may select different broadcasting processing methods depending on countries. The process of selecting a transmission method and a processing method, through which an automatic channel setup is performed, is the same as that according to the previous exemplary embodiment. Thus, detailed descriptions will be omitted.

According to an exemplary embodiment of the present invention, a setup UI includes at least one transmission method. Thus, if one of the at least one transmission method is selected, at least one processing method corresponding to the selected transmission method is displayed as a box in another axis. A user may select or cancel one of the at least one processing method displayed in a box to thereby select the transmission method and the processing method, through which the automatic channel setup is performed.

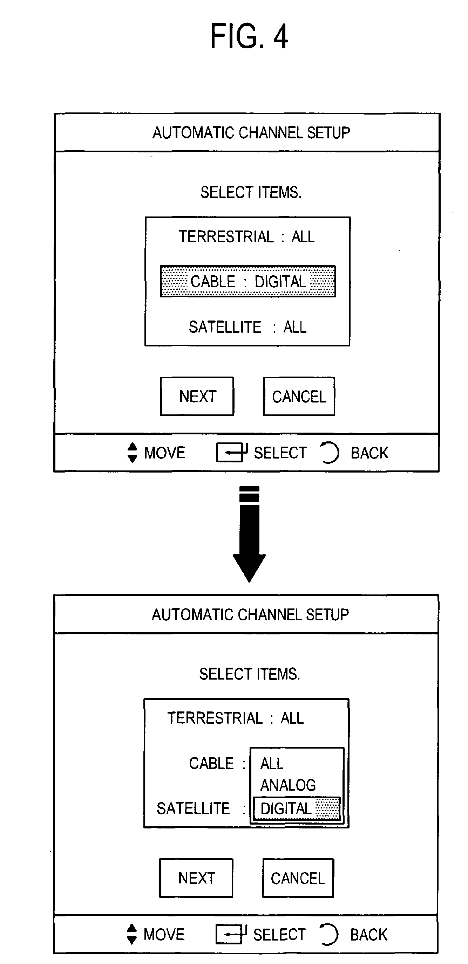

FIG 4 illustrates an example of a setup UI according to an exemplary embodiment of the present invention. As shown therein, a setup UI displays transmission methods such as terrestrial broadcasting, cable broadcasting and satellite broadcasting on a left side. If a user selects one of the transmission methods, the setup UI displays processing methods such as "ALL", "DIGITAL" and "ANALOG" in a box on a right side. Here, the item "ALL" is provided to select both the digital processing method and the analog processing method at a time.

A user selects or cancels one of the processing methods displayed in the box to thereby select the transmission method and the processing method, through which the automatic channel setup is performed. For example, if a user desires to perform an automatic channel setup through a cable transmission method and a digital processing method, the user selects "CABLE" displayed on the left side and then "DIGITAL" from a box displayed on the right side according to the selected cable item. If a user desires to perform an automatic channel setup through a "TERRESTRIAL" transmission method and both of a digital processing method and an analog processing method, the user selects "TERRESTRIAL" displayed on the left side and then "ALL" from the box displayed on the right side according to the selected item "TERRESTRIAL" broadcasting.

For purposes of convenience, in the foregoing exemplary embodiments, tables or boxes in which items such as "TERRESTRIAL", "CABLE" and "SATELLITE" transmission methods and "ALL", "DIGITAL" and "ANALOG" processing methods are displayed are provided, but the spirit of the present invention is not limited to the foregoing.

The controller 130 controls overall operations of the elements. According to an exemplary embodiment of the present invention, if a user initiates or triggers an automatic channel setup, the controller 130 controls the UI provider 140 to display a setup UI on the display unit 120, and perform the automatic channel setup through a transmission method and a processing method selected by a user through the setup UI. As described above, the controller 130 performs the automatic channel setup through the transmission method and the processing method selected through the setup UI.

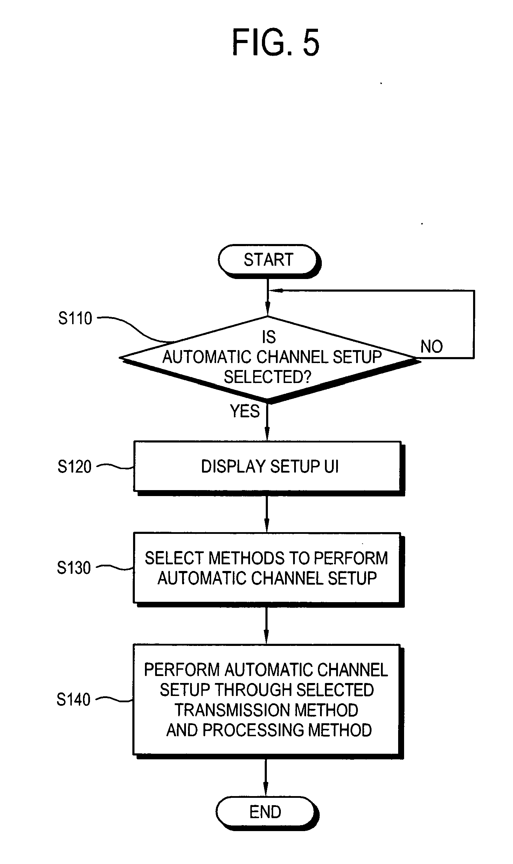

With the foregoing configuration, a process of performing the automatic channel setup in the broadcast processing apparatus 100 according to an exemplary embodiment of the present invention will be described with reference to FIG. 5.

As shown therein, the controller 130 determines whether a user initiates or triggers an automatic channel setup through a key (not shown) provided in the image processing apparatus 100 of FIG. 1 or a remote controller (not shown) (S110).

If the user selects the automatic channel setup, the controller 130 controls the UI provider 140 and the display unit 120 to display on the display unit 120 a setup UI (S120) so that the user may select a transmission method and a processing method to perform the automatic channel setup is performed (S 130).

If the user selects a transmission method and a processing method, the controller 130 performs the automatic channel setup through the transmission method and the processing method selected by the user through the setup UI (S140).

The setup UI is the same as those according to the previous exemplary embodiments of the present invention. Thus, detailed description will be avoided.

If the user selects the automatic channel setup, the broadcast processing apparatus 100 displays the setup UI for a user to select the transmission method and the processing method, through which the automatic channel setup is performed, and performs the automatic channel setup through the transmission method and the processing method selected by a user through the setup UI. Thus, the user not only performs the automatic channel setup through a desired method according to the user's preference, but also performs the automatic channel setup more conveniently. Although a few exemplary embodiments of the present invention have been shown and described, it will be appreciated by those skilled in the art that changes may be made in these exemplary embodiments without departing from the principles of the invention, the scope of which is defined in the appended claims and their equivalents.

## Claims

1. A broadcast processing apparatus (100) comprising:
an image processor (110) which processes an image received through one of a plurality of transmission methods by using one of plurality of processing methods;
a display unit (120) which displays thereon the image processed by the image processor (110),
a user interface (UI) provider (140) which provides a setup UI to select a transmission method for transmitting data of the image to the broadcasting processing apparatus and a processing method for processing the data of the image in the broadcasting processing apparatus, through which an automatic channel setup is performed, among the transmission methods and a plurality of processing methods, respectively; and
a controller (130) which displays the setup UI on the display unit (120) if the automatic channel setup is initiated, and performs the automatic channel setup through the transmission method and the processing method selected through the setup UI;
**characterised in that**
the UI provider is configured whereby for a first transmission method a processing method from the plurality of processing methods is selectable and for a second transmission method a processing method from the plurality of processing methods is selectable independently from the selection of the processing method of the first transmission method.

2. The broadcast processing apparatus (100) according to claim 1, wherein the at least one transmission method comprises at least one of a terrestrial transmission method, a cable transmission method, a satellite transmission method, an Internet protocol television transmission method and an external device transmission method.

3. The broadcast processing apparatus according to claim 2, wherein the at least one processing method comprises at least one of an analog processing method and a digital processing method.

4. The broadcast processing apparatus (100) according to claim 3, wherein the setup UI is provided as a table which has the at least one transmission method arranged on one side and the at least one processing method arranged in another side.

5. The broadcast processing apparatus (100) according to claim 4, wherein the setup UI is provided to select or cancel a cell located at an intersection of the one side and the other side and select the transmission method and the processing method, through which the automatic channel setup is performed.

6. The broadcast processing apparatus (100) according to claim 3, wherein the setup UI displays the at least one transmission method on one side and displays on another side, as a box shape, the at least one processing method corresponding to the selected transmission method if one of the at least one transmission method is selected.

7. The broadcast processing apparatus (100) according to claim 6, wherein the setup UI is provided to select or cancel the at least one processing method displayed in the box to select the transmission method and the processing method, through which the automatic channel setup is performed.

8. The broadcast processing apparatus according to claim 3, wherein the at least one processing method comprises at least one of a phase alternation by line (PAL) method, a national television system committee (NTSC) method and a sequential color and memory (SECAM) method.

9. A control method of a broadcast processing apparatus (100), the control method comprising:
displaying a setup user interface (UI) to select a transmission method for transmitting data of the image to the broadcasting processing apparatus and a processing method for processing the data of the image in the broadcasting processing apparatus, through which an automatic channel setup is performed, among a plurality of transmission methods and a plurality of processing methods, respectively, if the automatic channel setup is initiated; and
performing the automatic channel setup through the transmission method and the processing method selected through the setup UI;
**characterised in that**
for a first transmission method a processing method from the plurality of processing methods is selectable and for a second transmission method a processing method from the plurality of processing methods is selectable independently from the selection of the processing method of the first transmission method.

10. The control method according to claim 9, wherein the at least one transmission method comprises at least one of a terrestrial transmission method, a cable transmission method, a satellite transmission method, an Internet protocol television transmission method and an external device transmission method.

11. The control method according to claim 10, wherein the at least one processing method comprises at least one of an analog processing method and a digital processing method.

12. The control method according to claim 11, wherein the setup UI is provided as a table which has the at least one transmission method arranged on one side and the at least one processing method arranged on another side.

13. The control method according to claim 12, wherein the setup UI is provided to select or cancel a cell located at an intersection of the one side and the other side and select the transmission method and the processing method, through which the automatic channel setup is performed.

14. The control method according to claim 11, wherein the setup UI displays the at least one transmission method on one side and displays on another side, as a box shape, the at least one processing method corresponding to the selected transmission method if one of the at least one transmission method is selected.

15. The control method according to claim 11, wherein the at least one processing method comprises at least one of a phase alternation by line (PAL) method, a national television system committee (NTSC) method and a sequential color and memory (SECAM) method.

## Patentansprüche

1. Rundfunkverarbeitungsvorrichtung (100), die Folgendes aufweist:
einen Bildprozessor (110), der ein durch eines von mehreren Übertragungsverfahren empfangenes Bild unter Verwendung von einem von mehreren Verarbeitungsverfahren verarbeitet;
eine Anzeigeeinheit (120), die das durch den Bildprozessor (110) verarbeitete Bild darauf anzeigt;
einen Benutzeroberflächenanbieter (140), der eine Einstellungsbenutzeroberfläche zum Auswählen eines Übertragungsverfahrens zum Übertragen von Daten des Bildes an die Rundfunkverarbeitungsvorrichtung und eines Verarbeitungsverfahrens zum Verarbeiten der Daten des Bildes in der Rundfunkverarbeitungsvorrichtung, durch die eine automatische Kanaleinstellung durchgeführt wird, unter den Übertragungsverfahren beziehungsweise mehreren Verarbeitungsverfahren bereitstellt; und
einen Controller (130), der die Einstellungsbenutzeroberfläche auf der Anzeigeeinheit (120) anzeigt, wenn die automatische Kanaleinstellung eingeleitet wird, und die automatische Kanaleinstellung durch das durch die Einstellungsbenutzeroberfläche ausgewählte Übertragungsverfahren und Verarbeitungsverfahren durchführt;
**dadurch gekennzeichnet, dass**
der Benutzeroberflächenanbieter konfiguriert wird, wodurch für ein erstes Übertragungsverfahren ein Verarbeitungsverfahren von den mehreren Verarbeitungsverfahren ausgewählt werden kann und für ein zweites Übertragungsverfahren ein Verarbeitungsverfahren von den mehreren Verarbeitungsverfahren unabhängig von der Auswahl des Verarbeitungsverfahrens des ersten Übertragungsverfahrens ausgewählt werden kann.

2. Rundfunkverarbeitungsvorrichtung (100) nach Anspruch 1, wobei das mindestens eine Übertragungsverfahren mindestens eines von einem terrestrischen Übertragungsverfahren, einem Kabelübertragungsverfahren, einem Satellitenübertragungsverfahren, einem Internetprotokoll-Fernsehübertragungsverfahren und einem Übertragungsverfahren eines externen Geräts aufweist.

3. Rundfunkverarbeitungsvorrichtung nach Anspruch 2, wobei das mindestens eine Verarbeitungsverfahren mindestens eines von einem analogen Verarbeitungsverfahren und einem digitalen Verarbeitungsverfahren aufweist.

4. Rundfunkverarbeitungsvorrichtung (100) nach Anspruch 3, wobei die Einstellungsbenutzeroberfläche als eine Tabelle bereitgestellt wird, in der das mindestens eine Übertragungsverfahren auf einer Seite und das mindestens eine Verarbeitungsverfahren auf einer anderen Seite angeordnet sind.

5. Rundfunkverarbeitungsvorrichtung (100) nach Anspruch 4, wobei die Einstellungsbenutzeroberfläche bereitgestellt wird, um eine Zelle, die sich an einem Schnittpunkt der einen Seite und der anderen Seite befindet, auszuwählen oder aufzuheben und das Übertragungsverfahren und das Verarbeitungsverfahren auszuwählen, durch die die automatische Kanaleinstellung durchgeführt wird.

6. Rundfunkverarbeitungsvorrichtung (100) nach Anspruch 3, wobei die Einstellungsbenutzeroberfläche das mindestens eine Übertragungsverfahren auf einer Seite anzeigt und auf einer anderen Seite als eine Kästchenform das mindestens eine Verarbeitungsverfahren anzeigt, das dem ausgewählten Übertragungsverfahren entspricht, wenn eines von dem mindestens einen Übertragungsverfahren ausgewählt ist.

7. Rundfunkverarbeitungsvorrichtung (100) nach Anspruch 6, wobei die Einstellungsbenutzeroberfläche bereitgestellt wird, um das mindestens eine in dem Kästchen angezeigte Verarbeitungsverfahren auszuwählen oder aufzuheben, um das Übertragungsverfahren und das Verarbeitungsverfahren auszuwählen, durch die die automatische Kanaleinstellung durchgeführt wird.

8. Rundfunkverarbeitungsvorrichtung nach Anspruch 3, wobei das mindestens eine Verarbeitungsverfahren mindestens eines von einem PAL-Verfahren (Phase Alternation by Line), einem NTSC-Verfahren (National Television System Committee) und einem SECAM-Verfahren (Sequential Color and Memory) aufweist.

9. Verfahren zum Steuern einer Rundfunkverarbeitungsvorrichtung (100), wobei das Steuerverfahren Folgendes aufweist:
Anzeigen einer Einstellungsbenutzeroberfläche zum Auswählen eines Übertragungsverfahrens zum Übertragen von Daten des Bildes an die Rundfunkverarbeitungsvorrichtung und eines Verarbeitungsverfahrens zum Verarbeiten der Daten des Bildes in der Rundfunkverarbeitungsvorrichtung, durch die eine automatische Kanaleinstellung durchgeführt wird, unter mehreren Übertragungsverfahren beziehungsweise mehreren Verarbeitungsverfahren, wenn die automatische Kanaleinstellung eingeleitet wird; und
Durchführen der automatischen Kanaleinstellung durch das durch die Einstellungsbenutzeroberfläche ausgewählte Übertragungsverfahren und Verarbeitungsverfahren;
**dadurch gekennzeichnet, dass**
für ein erstes Übertragungsverfahren ein Verarbeitungsverfahren von den mehreren Verarbeitungsverfahren ausgewählt werden kann und für ein zweites Übertragungsverfahren ein Verarbeitungsverfahren von den mehreren Verarbeitungsverfahren unabhängig von der Auswahl des Verarbeitungsverfahrens des ersten Übertragungsverfahrens ausgewählt werden kann.

10. Steuerverfahren nach Anspruch 9, wobei das mindestens eine Übertragungsverfahren mindestens eines von einem terrestrischen Übertragungsverfahren, einem Kabelübertragungsverfahren, einem Satellitenübertragungsverfahren, einem Internetprotokoll-Fernsehübertragungsverfahren und einem Übertragungsverfahren eines externen Geräts aufweist.

11. Steuerverfahren nach Anspruch 10, wobei das mindestens eine Verarbeitungsverfahren mindestens eines von einem analogen Verarbeitungsverfahren und einem digitalen Verarbeitungsverfahren aufweist.

12. Steuerverfahren nach Anspruch 11, wobei die Einstellungsbenutzeroberfläche als eine Tabelle bereitgestellt wird, in der das mindestens eine Übertragungsverfahren auf einer Seite und das mindestens eine Verarbeitungsverfahren auf einer anderen Seite angeordnet ist.

13. Steuerverfahren nach Anspruch 12, wobei die Einstellungsbenutzeroberfläche bereitgestellt wird, um eine Zelle, die sich an einem Schnittpunkt der einen Seite und der anderen Seite befindet, auszuwählen oder aufzuheben und das Übertragungsverfahren und das Verarbeitungsverfahren auszuwählen, durch die die automatische Kanaleinstellung durchgeführt wird.

14. Steuerverfahren nach Anspruch 11, wobei die Einstellungsbenutzeroberfläche das mindestens eine Übertragungsverfahren auf einer Seite anzeigt und auf einer anderen Seite als eine Kästchenform das mindestens eine Verarbeitungsverfahren anzeigt, das dem ausgewählten Übertragungsverfahren entspricht, wenn eines von dem mindestens einen Übertragungsverfahren ausgewählt ist.

15. Steuerverfahren nach Anspruch 11, wobei das mindestens eine Verarbeitungsverfahren mindestens eines von einem PAL-Verfahren (Phase Alternation by Line), einem NTSC-Verfahren (National Television System Committee) und einem SECAM-Verfahren (Sequential Color and Memory) aufweist.

## Revendications

1. Appareil de traitement de diffusion (100) comprenant :
un processeur d'image (110) qui traite une image reçue au moyen d'un procédé parmi une pluralité de procédés de transmission en utilisant un procédé parmi une pluralité de procédés de traitement ;
un écran de visualisation (120) qui affiche sur lui l'image traitée par le processeur d'image (110) ;
un fournisseur d'interface utilisateur (IU) (140) qui fournit une IU de configuration pour sélectionner un procédé de transmission afin de transmettre les données de l'image à l'appareil de traitement de diffusion et un procédé de traitement pour le traitement des données de l'image dans l'appareil de traitement de diffusion, au moyen desquels une configuration automatique des chaînes est exécutée, parmi les procédés de transmission et une pluralité de procédés de traitement respectivement ; et
un contrôleur (130) qui affiche l'IU de configuration sur l'écran d'affichage (120) si la configuration automatique des chaînes est lancée, et qui exécute la configuration automatique des chaînes au moyen du procédé de transmission et du procédé de traitement sélectionnés au moyen de l'IU de configuration ;
**caractérisé en ce que**
le fournisseur d'IU est configuré de manière à ce que, pour un premier procédé de transmission, un procédé de traitement parmi la pluralité de procédés de traitement peut être sélectionné et, pour un deuxième procédé de transmission, un procédé de traitement parmi la pluralité de procédés de traitement peut être sélectionné indépendamment de la sélection du procédé de traitement du premier procédé de transmission.

2. Appareil de traitement de diffusion (100) selon la revendication 1, dans lequel l'au moins un procédé de transmission comprend au moins soit un procédé de transmission terrestre, soit un procédé de transmission par câble, soit un procédé de transmission par satellite, soit un procédé de transmission par télévision sur IP, soit un procédé de transmission par dispositif externe.

3. Appareil de traitement de diffusion (100) selon la revendication 2, dans lequel l'au moins un procédé de traitement comprend au moins soit un procédé de traitement analogique, soit un procédé de traitement numérique.

4. Appareil de traitement de diffusion (100) selon la revendication 3, dans lequel l'IU de configuration est fournie comme un tableau qui a l'au moins un procédé de transmission disposé sur un côté et l'au moins un procédé de traitement disposé sur un autre côté.

5. Appareil de traitement de diffusion (100) selon la revendication 4, dans lequel l'IU de configuration est fournie pour sélectionner ou annuler une cellule à une intersection de l'un côté et de l'autre côté et pour sélectionner le procédé de transmission et le procédé de traitement, au moyen desquels la configuration automatique des chaînes est exécutée.

6. Appareil de traitement de diffusion (100) selon la revendication 3, dans lequel l'IU de configuration affiche l'au moins un procédé de transmission sur un côté et affiche sur un autre côté, sous la forme d'un pavé, l'au moins un procédé de traitement correspondant au procédé de transmission sélectionné si un de l'au moins un procédé de transmission est sélectionné.

7. Appareil de traitement de diffusion (100) selon la revendication 6, dans lequel l'IU de configuration est fournie pour sélectionner ou annuler l'au moins un procédé de traitement affiché dans le pavé pour sélectionner le procédé de transmission et le procédé de traitement, au moyen desquels la configuration automatique des chaînes est exécutée.

8. Appareil de traitement de diffusion (100) selon la revendication 3, dans lequel l'au moins un procédé de traitement comprend au moins soit un procédé d'alternance de phase suivant les lignes (PAL), soit un procédé du National Television System Committee (NTSC), soit un procédé séquentiel couleur à mémoire (SECAM).

9. Procédé de commande d'un appareil de traitement de diffusion (100), ce procédé de commande comprenant :
l'affichage d'une interface utilisateur (IU) de configuration pour sélectionner un procédé de transmission afin de transmettre les données de l'image à l'appareil de traitement de diffusion et un procédé de traitement pour le traitement des données de l'image dans l'appareil de traitement de diffusion, au moyen desquels une configuration automatique des chaînes est exécutée, parmi une pluralité de procédés de transmission et une pluralité de procédés de traitement respectivement, si la configuration automatique des chaînes est lancée ; et
l'exécution de la configuration automatique des chaînes au moyen du procédé de transmission et du procédé de traitement sélectionnés avec l'IU de configuration ;
**caractérisé en ce que**
pour un premier procédé de transmission, un procédé de traitement parmi la pluralité de procédés de traitement peut être sélectionné et, pour un deuxième procédé de transmission, un procédé de traitement parmi la pluralité de procédés de traitement peut être sélectionné indépendamment de la sélection du procédé de traitement du premier procédé de transmission.

10. Procédé de commande selon la revendication 9, dans lequel l'au moins un procédé de transmission comprend au moins soit un procédé de transmission terrestre, soit un procédé de transmission par câble, soit un procédé de transmission par satellite, soit un procédé de transmission par télévision sur IP, soit un procédé de transmission par dispositif externe.

11. Procédé de commande selon la revendication 10, dans lequel l'au moins un procédé de traitement comprend au moins soit un procédé de traitement analogique, soit un procédé de traitement numérique.

12. Procédé de commande selon la revendication 11, dans lequel l'IU de configuration est fourni comme un tableau qui a l'au moins un procédé de transmission disposé sur un côté et l'au moins un procédé de traitement disposé sur un autre côté.

13. Procédé de commande selon la revendication 12, dans lequel l'IU de configuration est fournie pour sélectionner ou annuler une cellule à une intersection de l'un côté et de l'autre côté et pour sélectionner le procédé de transmission et le procédé de traitement, au moyen desquels la configuration automatique des chaînes est exécutée.

14. Procédé de commande selon la revendication 11, dans lequel l'IU de configuration affiche l'au moins un procédé de transmission sur un côté et affiche sur un autre côté, sous la forme d'un pavé, l'au moins un procédé de traitement correspondant au procédé de transmission sélectionné si un de l'au moins un procédé de transmission est sélectionné.

15. Procédé de commande selon la revendication 11, dans lequel l'au moins un procédé de traitement comprend au moins soit un procédé d'alternance de phase suivant les lignes (PAL), soit un procédé du National Télévision System Committee (NTSC), soit un procédé séquentiel couleur à mémoire (SECAM).
